(19) Europäisches Patentamt
European Patent Office
Office européen des brevets

(11) EP 4 223 835 A1

# (12) EUROPEAN PATENT APPLICATION
published in accordance with Art. 153(4) EPC

(43) Date of publication:
**09.08.2023 Bulletin 2023/32**

(21) Application number: **21874994.3**

(22) Date of filing: **25.08.2021**

(51) International Patent Classification (IPC):
***C08L 1/08*** $^{(2006.01)}$ ***C08L 67/04*** $^{(2006.01)}$
***C08L 101/16*** $^{(2006.01)}$ ***C08B 3/20*** $^{(2006.01)}$

(52) Cooperative Patent Classification (CPC):
**C08B 3/20; C08B 15/00; C08L 1/08; C08L 67/04; C08L 101/16**

(86) International application number:
**PCT/JP2021/031136**

(87) International publication number:
**WO 2022/070691 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165781**

(71) Applicants:
- **Daio Paper Corporation**
  **Ehime 799-0492 (JP)**
- **Osaka Research Institute of Industrial Science and Technology**
  **Izumi-shi, Osaka 594-1157 (JP)**

(72) Inventors:
- **KADOTA, Joji**
  **Osaka-shi, Osaka 536-8553 (JP)**
- **AGARI, Yasuyuki**
  **Osaka-shi, Osaka 536-8553 (JP)**
- **HIRANO, Hiroshi**
  **Osaka-shi, Osaka 536-8553 (JP)**
- **OKADA, Akinori**
  **Osaka-shi, Osaka 536-8553 (JP)**
- **IMAI, Takaaki**
  **Shikokuchuo-shi, Ehime 799-0492 (JP)**

(74) Representative: **Meissner Bolte Partnerschaft mbB**
**Patentanwälte Rechtsanwälte**
**Postfach 86 06 24**
**81633 München (DE)**

## (54) CELLULOSE COMPOSITE RESIN

(57) A cellulose composite resin having excellent tensile strength is provided. The cellulose composite resin contains cellulose nanofibers and ungrafted polylactide, the cellulose nanofibers are grafted cellulose nanofibers having graft chains, and individual graft chains are formed of polylactides.

EP 4 223 835 A1

## Description

FIELD OF ART

The present invention relates to a cellulose composite resin containing cellulose nanofibers and polylactide.

BACKGROUND ART

Recently, from a perspective of global environmental conservation, biodegradable resins have been attracting attention, which are decomposable in the natural environment by the action of microorganisms present in soil and water. Among them, polylactide is expected to be developed in its applications for its relatively low cost and applicability to melt molding. However, polylactide is more rigid, more brittle, and less flexible compared to utility resins. In view of this, it is required for polylactide to have sufficiently improved strength properties in order not to be fractured by external force.

In this regard, there is now proposed, for example, to form a composite of polylactide and finely-ground waste paper (for example, see Patent Publication 1). However, a composite of polylactide and finely ground waste paper has a low tensile strength though its tensile elastic modulus is improved. Accordingly, the resulting composite resin is brittle, though hard.

There is also proposed, for example, polylactide-microfibrillated cellulose composite material, wherein microfibrillated cellulose is coated on its surface with polylactide (for example, see Patent Publication 2). This publication teaches that, according to this proposal, the composite material is improved in impact strength. However, the proposal does not make any reference to tensile strength, while it is required to separately seek for improvement in tensile strength in order to avoid fracture of a composite resin.

PRIOR ART PUBLICATION

PATENT PUBLICATION

Patent Publication 1: JP 2019-218545 A
Patent Publication 2: JP 2007-238812 A

SUMMAY OF THE INVENTION

It is therefore an object of the present invention to provide a cellulose composite resin having excellent tensile strength.

MEANS FOR SOLVING THE PROBLEM

Means for solving the above problem are as follows:

<Means Recited in Claim 1>

A cellulose composite resin containing cellulose nanofibers and ungrafted polylactide,
wherein the cellulose nanofibers are grafted cellulose nanofibers having graft chains, and individual graft chains are formed of polylactides.

<Means Recited in Claim 2>

The cellulose composite resin according to claim 1,
wherein a content of the grafted cellulose nanofibers is 46 mass% or less of a content of the ungrafted polylactide.

<Means Recited in Claim 3>

The cellulose composite resin according to claim 1 or 2,
wherein a graft percentage of the grafted cellulose nanofibers is 1 to 7%.

<Means Recited in Claim 4>

The cellulose composite resin according to any one of claims 1 to 3,
wherein raw materials of the grafted cellulose nanofibers include cellulose fibers 0.5 mmol/g or less of which hydroxyl groups have been modified.

<Means Recited in Claim 5>

The cellulose composite resin according to any one of claims 1 to 4,
wherein less than 50% of hydroxyl groups of the grafted cellulose nanofibers have been ionized.

<Means Recited in Claim 6>

The cellulose composite resin according to any one of claims 1 to 5,
wherein a degree of crystallinity of the grafted cellulose nanofibers is 50 to 90%.

EFFECT OF THE INVENTION

According to the present invention, a cellulose composite resin having excellent tensile strength is provided.

EMBODIMENTS FOR CARRYING OUT THE INVENTION

Embodiments for carrying out the present invention will now be discussed. The embodiments are mere examples of the present invention, and the scope of the present invention is not limited by the scopes of the present embodiments.

The cellulose composite resin according to the present embodiment contains cellulose nanofibers (CNF) and ungrafted polylactide, wherein the cellulose nanofibers are grafted cellulose nanofibers having graft chains, and the individual graft chains are formed of polylactides. Details are discussed below in order. Note that, in the following description, cellulose nanofibers onto which polylactides have been grafted may sometimes be referred to simply as polylactide-grafted cellulose nanofibers, or grafted cellulose nanofibers.

<Grafted Cellulose Nanofibers>

The grafted cellulose nanofibers according to the present embodiment may be obtained by defibrating (making finer) raw material pulp (cellulose fibers) and subjecting the defibrated product to grafting. Details of the defibration and the grafting will be discussed later.

Cellulose fibers to be subjected to grafting may either be cellulose fibers which have not undergone modification other than polylactide grafting (in the present embodiment, such cellulose fibers may sometimes be referred to simply as unmodified fibers), or cellulose fibers which have undergone modification other than the grafting (modified fibers). According to the present embodiment, the cellulose fibers are preferably the unmodified fibers. In this regard, polylactide grafting starts from and ends with hydroxyl groups. In preparing polylactide-grafted cellulose nanofibers, cellulose fibers are used as an initiator, wherein the hydroxyl groups act as the starting points of the reaction. As such, when part of the hydroxyl groups of cellulose fibers have been modified with carboxyl groups or phosphoester groups, efficiency of the polylactide grafting may be lowered.

As used herein, "unmodified" is envisaged to mean that the cellulose fibers have not undergone chemical modification, such as TEMPO oxidation, modification with oxoacid of phosphorous, such as phosphoric acid or phosphorus acid, or carbamate modification. In other words, modification excludes grafting. Thus, according to the present embodiment, "unmodified" is defined to mean that the hydroxyl groups on the surface of cellulose fibers have not undergone modification other than grafting.

Further, even the cellulose fibers modified for some reason may be used where the amount of the modified hydroxyl groups of the cellulose fibers is preferably 0.5 mmol/g or less, more preferably 0.3 mmol/g or less, particularly preferably 0.1 mmol/g or less. With the amount of the modified hydroxyl groups of 0.5 mmol/g or less, the cellulose fibers may achieve the desired graft percentage without being affected by the other modified functional groups.

Cellulose fibers that may be used as a raw material of the grafted cellulose nanofibers may be one or more members selected from, for example, chemical pulp including hardwood kraft pulp (LKP), such as hardwood bleached kraft pulp (LBKP) and hardwood unbleached kraft pulp (LUKP), and softwood kraft pulp (NKP), such as softwood bleached kraft pulp (NBKP) and softwood unbleached kraft pulp (NUKP); and mechanical pulp, including stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), and bleached thermomechanical pulp (BTMP). Among them, bleached chemical pulp (LBKP, NBKP, or the like) may preferably be used, as it has a large number of hydroxyl groups, which function as the starting points of polylactide grafting.

Cellulose fibers, before the defibration, may be subjected to, for example, chemical or mechanical pretreatment in an aqueous system. Such a pretreatment may reduce the energy required for the defibration.

It is preferred to pretreat cellulose fibers in an aqueous system without modifying the functional groups of the cellulose fibers. In this regard, the pretreatment may be, for example, oxidation of primary hydroxyl groups of cellulose in the presence of an N-oxyl compound, such as 2,2,6,6-tetramethyl-1-piperidine-N-oxy radical (TEMPO), as a catalyst, or modification of hydroxyl groups with phosphoester groups using phosphoric acid-based chemicals. However, with such pretreatment, the defibration may proceed drastically until the fiber diameter falls down to the order of single nanometers (several nanometers), which may result in difficulties in defibration into a desired fiber width. Further, the amount of the hydroxyl groups, which are to act as the starting points of the reaction, may be decreased to make the polylactide grafting hard to proceed. Accordingly, the pretreatment, if performed, is preferably a chemical treatment that does not modify the hydroxyl groups of cellulose, such as hydrolysis with mineral acid (hydrochloric acid, sulfuric acid, phosphoric acid, or the like), enzyme, or the like, or mechanical defibration (preferably beating). Note that pretreatment in an aqueous system has an advantage of reduced costs for recovery or removal of solvents.

The cellulose nanofibers have an average fiber width (average diameter of single fibers) of preferably 1000 to 3 nm, more preferably 500 to 4 nm, particularly preferably 100 to 5 nm. With the cellulose nanofibers having the average fiber width of 1000 to 3 nm, the number of fibers in a melted resin per weight may be made larger, which is assumed to contribute to a higher melt viscosity of the resin. On the other hand, with the average fiber width of less than 3 nm, the fibers may be dissolved in water, the matrix resin, or the like, and hard to maintain their fibrous forms, which may lead to incapability of exhibiting their reinforcing property. With the average fiber width over 1000 nm, the fibers can no longer be cellulose nanofibers but are no different from microfiber cellulose (MFC) or ordinary cellulose fibers, so that their mechanical properties may be impaired due to deterioration in compatibility between the graft fibers and the resin or in homogeneity as a composite resin.

In sum, according to the present embodiment, cellulose nanofibers may be said to be fine fibers having an average fiber width of 1000 to 3 nm. Note that cellulose nanofibers are fibers which have been made finer with the structure of the cellulose crystals (cellulose I) maintained. Thus, for example, a cellulose-based composition obtained through polymerization by mixing cellulose powder and a ε-caprolactone/lactide solution, shows only minor peaks representing the cellulose I crystals, and is different from cellulose nanofibers. Further, nanocrystalline cellulose particles are also recognized as being similar to but different from cellulose nanofibers. Nanocrystalline cellulose particles are not fibers but acicular crystals, and may also be referred to as cellulose nanocrystals (CNC). Cellulose nanocrystals are produced through acid hydrolysis or the like process so as to leave only the cellulose crystals in the course of making pulp or the like finer. In contrast, cellulose nanofibers are produced by making pulp or the like finer so as to leave not only the crystals but also non-crystalline portions, which results in the fiber shapes being maintained to contribute to the enhancement of the strength properties when the cellulose nanofibers are made into a composite with the resin.

The average fiber width of the cellulose nanofibers may arbitrarily be adjusted by, for example, selection, pretreatment, or making finer of cellulose fibers.

The average fiber width of cellulose nanofibers is determined in the following manner with an electron microscope.

First, 100 ml of an aqueous dispersion of cellulose nanofibers having a solid concentration of 0.01 to 0.1 mass% is subjected to filtration through a TEFLON (registered trademark) membrane filter, and to solvent substitution once with 100 ml of ethanol and three times with 20 ml of t-butanol. Then the resulting mass is lyophilized and coated with osmium to obtain a sample. An electron microscopic SEM image of this sample is observed at a magnification of 5000 folds, 10000 folds, or 30000 folds, depending on the width of the constituent fibers. In this observation, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber diameter.

The average fiber length (length of single fibers) of cellulose nanofibers is preferably 0.1 to 1000 μm, more preferably 0.2 to 500 μm, particularly preferably 0.3 to 100 μm. With an average fiber length of less than 0.1 μm, the fibers may be too short to exhibit reinforcing property in the resin. With an average fiber length over 1000 μm, the fibers may aggregate.

The average fiber length of the cellulose nanofibers may arbitrarily be adjusted by, for example, selection, pretreatment, or making finer of cellulose fibers.

The average fiber length of the cellulose nanofibers is determined by visual observation of the length of each fiber, as in the determination of the average fiber width. The median length of the measured values is taken as the average fiber length.

The axial ratio (fiber length / fiber width) of the cellulose nanofibers is preferably 2 to 10000, more preferably 5 to 1000, particularly preferably 10 to 100. With an axial ratio of less than 2, the nanofibers can no longer be referred

to as fibers. With an axial ratio over 10000, the viscosity of the composition (slurry) may be too high.

The pseudo particle size distribution curve of the cellulose nanofibers preferably has one peak. With one peak, the cellulose nanofibers have high uniformity in fiber length and fiber diameter, and an enhanced tensile strength is imparted to the cellulose composite resin. With high uniformity in fiber diameter and fiber length, the cellulose nanofibers disperse well when mixed with polylactide.

The particle diameter at the peak of the pseudo particle size distribution curve (the mode) is preferably 5 to 60 μm. With the peak within this range, the fiber size of the cellulose nanofibers is small enough, which allows exhibition of the reinforcing property as nanofibers.

The half width of the peak of the pseudo particle size distribution curve of the cellulose nanofibers is preferably 100 μm or less, more preferably 70 μm or less, particularly preferably 50 μm or less. With the half width of the peak exceeding 100 μm, the fibers lack uniformity.

The peak value for the cellulose nanofibers is determined in accordance with ISO-13320 (2009). Specifically, a volume-based particle size distribution of an aqueous dispersion of the cellulose nanofibers is determined using a particle size distribution measuring device (laser diffraction/scattering-type particle size distribution measuring apparatus manufactured by SEISHIN ENTERPRISE CO., LTD.). From the obtained distribution, the mode for the diameter of the cellulose nanofibers is determined. This mode for the diameter is taken as the peak value.

The degree of crystallinity of the cellulose nanofibers is preferably 50 to 95%, more preferably 55 to 90%, particularly preferably 60 to 85%. With a degree of crystallinity below 50%, the strength of the fibers per se may be low, which may lead to deterioration of the effect of increasing melt viscosity. The tensile strength of the cellulose composite resin obtained therefrom may also be insufficient. With a degree of crystallinity over 95%, the ratio of firm hydrogen bonding within the molecules is high, which makes the fibers themselves rigid, but makes it hard to be chemically modified.

The degree of crystallinity of the cellulose nanofibers may arbitrarily be adjusted by, for example, selection, pretreatment, or defibration of cellulose fibers.

The degree of crystallinity refers to a value determined by X-ray diffraction in compliance with JIS K 0131 (1996) "General Rules for X-ray Diffraction Analysis". Note that cellulose nanofibers have amorphous regions and crystalline regions, and the degree of crystallinity refers to the ratio of the crystalline regions with respect to the entire cellulose nanofibers.

The lower limit of the B-type viscosity of a dispersion of the cellulose nanofibers having 1 mass% solid concentration is preferably 1 cps, more preferably 3 cps, particularly preferably 5 cps. With a B-type viscosity of the dispersion of lower than 1 cps, the fiber state may not be maintained during polylactide-grafting reaction, or the effect of increasing melt viscosity may be impaired. On the other hand, the upper limit of the B-type viscosity of the dispersion is preferably 7000 cps, more preferably 6000 cps, particularly preferably 5000 cps. With the B-type viscosity of the dispersion over 7000 cps, a huge amount of energy is required for pumping up the aqueous dispersion for transportation, which may add to the manufacturing cost.

The B-type viscosity of a dispersion (1% solid concentration) is a value determined in compliance with JIS-Z8803 (2011) "Method for Viscosity Measurement of Liquid". B-type viscosity is resistant torque in stirring a dispersion, and a higher value indicates more energy required for stirring.

The lower limit of the pulp viscosity of the cellulose nanofibers is preferably 0.1 cps, mor preferably 0.5 cps. With a pulp viscosity of lower than 0.1 cps, the fiber state may not be maintained during polylactide-grafting reaction due to the lower degree of polymerization of the cellulose nanofibers, or the effect of increasing the melt viscosity may be impaired.

The upper limit of the pulp viscosity of the cellulose nanofibers is preferably 50 cps, more preferably 40 cps. With a pulp viscosity over 50 cps, the degree of polymerization of the cellulose nanofibers per se is too high, resulting in too large a length as fibers, which may interfere with sufficient control of aggregation of cellulose nanofibers during polylactide-grafting reaction to cause non-uniform progress of the polylactide-grafting reaction.

The pulp viscosity is determined in compliance with JIS-P8215 (1998). Note that a higher pulp viscosity indicates a higher degree of polymerization of cellulose.

The water retention of the cellulose nanofibers is preferably 600 to 200%, more preferably 550 to 250%, particularly preferably 500 to 300%. With a water retention below 200%, the cellulose nanofibers has not been nanosized sufficiently, and may not sufficiently exhibit the properties as nanofibers. With a water retention over 600%, efficiency in solvent substitution or drying may be lowered, which may add to the manufacturing cost.

The water retention of the cellulose nanofibers may arbitrarily be adjusted by, for example, selection, pretreatment, or defibration of cellulose fibers.

The water retention of cellulose nanofibers refers to a value determined in compliance with JAPAN TAPPI No. 26 (2000).

The graft percentage with respect to the cellulose nanofibers is preferably 1 to 7%, more preferably 1.2 to 6%, particularly preferably 1.5 to 5%. With a graft percentage below 1%, the cellulose nanofibers may have insufficient compatibility with the resin as a matrix, and may not exhibit the reinforcing effect as fibers. When a graft percentage is

over 7%, the grafting process for achieving such a high graft percentage may involve a high cost.

Note that, when the grafting is performed through bulk polymerization, the graft percentage is preferably 40% or lower. When the grafting is performed through solution polymerization, the graft percentage is preferably 1 to 7%. A higher graft percentage does not always provide more effect. For example, through the solution polymerization, a higher reinforcing effect may be expected due to smaller and more uniform length of the grafted polylactides.

Here, the graft percentage will further be discussed in detail.

As used herein, the graft percentage refers to a value (%) calculated from the absorbance ratio (C=O absorbance / OH absorbance). More specifically, IR spectra of sample mixtures of the cellulose nanofibers and separately prepared polylactide at a ratio by mass of 100/0, 80/20, 70/30, 50/50, 40/60, 20/80, or 0/100 were obtained, and based on the ratio of the OH absorbance representing the cellulose nanofibers and the C=O absorbance representing the polylactide, a calibration line of the absorbance ratio with respect to the mass ratio of polylactide to the cellulose nanofibers is drawn, from which the mass ratio of the grafted polylactide component with respect to the cellulose nanofiber component in the polylactide-grafted cellulose nanofibers, i.e., the graft percentage, is obtained.

First, the absorbance ratio will now be discussed. The OH absorbance refers to the absorbance representing the hydroxyl groups O-H of cellulose, in the infrared absorption spectrum of the polylactide-grafted cellulose nanofibers. The C=O absorbance refers to the absorbance representing C=O of the carbonyl groups of polylactide. Polylactide-grafted cellulose nanofibers are insoluble in most solvents and will not melt under heating, and thus is not adapted to molecular weight determination by GPC or structural analysis by NMR. Consequently, determination of infrared (also referred to as IR hereinbelow) absorption spectrum is preferred.

The absorbance ratio may be determined by subjecting the polylactide-grafted cellulose nanofibers to purification with a solvent which dissolves polylactide, such as dichloromethane or tetrahydrofuran, to completely remove ungrafted polylactide, before determining the IR spectrum. Note that, at too low an absorbance ratio, characteristics of polylactide are hard to be expressed, whereas at too high an absorbance ratio, characteristics of cellulose are hard to be observed.

For obtaining the calibration line, the above-mentioned cellulose nanofibers and separately prepared polylactide are mixed at a ratio by mass of 100/0, 80/20, 70/30, 50/50, 40/60, 20/80, and 0/100 to prepare samples, the IR spectrum of each sample is determined, and the measured data are plotted on a chart with the X-axis representing the ratio of 100 to the mass percent of polylactide and the Y-axis representing the ratio of the OH absorbance of CNF to the C=O absorbance of polylactide, to obtain an approximate line Y = 0.1469X - 0.1339.

When the calibration line is obtained, Y on the calibration line is substituted with the absorbance ratio of the objective grafted cellulose nanofibers to obtain X, to thereby determine the graft percentage.

According to the present embodiment, of the hydroxyl groups of cellulose nanofibers, preferably less than 50%, more preferably 40 to 0%, particularly preferably 30 to 0% have been ionized. When 50% or more of the hydroxyl groups are ionized, it is assumed that such ionized hydroxyl groups react with ungrafted polylactide, which is the matrix of the composite resin, to lower the molecular weight of the polylactide, which results in deterioration of the tensile strength.

The percentage of the ionized hydroxyl groups may be determined by neutralization titration in compliance with JIS K 1310:2000, or the like.

The content of the grafted cellulose nanofibers is preferably 1 to 9900%, more preferably 1 to 100%, particularly preferably 1 to 43% by mass of the content of the ungrafted polylactide. At less than 1%, the effect from the grafted cellulose nanofibers contained may not be exhibited. The grafted cellulose nanofibers produce greater reinforcing effect, compared to ungrafted cellulose nanofibers, over a wide range of content up to a content with little ungrafted polylactide (the content of the grafted cellulose nanofibers is 10000% or more) or the grafted cellulose nanofibers alone.

Note that, however, when the grafted cellulose nanofibers are to be made into a composite with the resin through a mixing mode as will be discussed later, the content thereof is suitably 1 to 43%. Similarly, when a composite is made through a laminating mode, the content is suitably 66 to 150%. Further, when a composite is made through an impregnating mode, the content is suitably 400 to 9900%.

The content of the grafted cellulose nanofibers may be determined by introducing the composite into dichloromethane to dissolve ungrafted polylactide, filtering the resulting solution and washing the undissolved residue with dichloromethane, drying and then weighing the resulting product, and calculating according to the following formula:

$$\text{Content of grafted cellulose nanofibers} = \text{Weight of residue} / (\text{Weight of composite} - \text{Weight of residue}) \times 100$$

<Polylactide>

The polylactides to be the graft chains and the polylactide to be mixed with the grafted cellulose nanofibers

(also referred to simply as ungrafted polylactide) may be polymers of L-lactide, polymers of D-lactide, or random or block copolymers of L-lactide and D-lactide. A wide range of commercially available polylactide may be used.

<Production Process: Defibration>

Through defibration (making finer), cellulose fibers are fibrillated into cellulose nanofibers.

Cellulose fibers, when being defibrated, are preferably in the form of a slurry. The slurry has a solid concentration of preferably 0.1 to 20 mass%, more preferably 0.5 to 10 mass%, particularly preferably 1.0 to 5.0 mass%. With the solid concentration within the above-mentioned range, the cellulose fibers may be defibrated efficiently.

Cellulose fibers may be defibrated using one or more means selected from the group consisting of, for example, high-pressure homogenizers, homogenizers like high-pressure homogenizing apparatus, high-speed rotary homogenizers, millstone friction machines, such as grinders and mills, refiners, such as conical refiners and disc refiners, single-screw kneaders, multi-screw kneaders, means using various bacteria, and the like.

The defibration of cellulose fibers is preferably carried out so that the resulting cellulose nanofibers have the average fiber width, the average fiber length, and the like falling under the desired values or evaluations as discussed above.

<Production Process: Grafting>

Next, polylactide-grafting of cellulose fibers is discussed.

According to the present embodiment, lactide is graft-polymerized onto cellulose constituting the cellulose nanofibers, in the presence of an organic polymerization catalyst, to obtain polylactide-grafted cellulose nanofibers.

More specifically, in this process, in the presence of an organic polymerization catalyst composed of amines and salts obtained through reaction of the amines and acids, lactide (lactide is a cyclic compound having in its molecule two ester bonds resulting from dehydration condensation of the hydroxyl group and the carboxyl group of two hydroxy acid molecules) is graft-polymerized onto cellulose, which has hydroxyl groups. In this graft-polymerization, in the presence of an organic polymerization catalyst, ring-opened lactides are polymerized via ester bonds onto the hydroxyl groups of cellulose to form polylactides as the graft chains. According to the present process, since the organic polymerization catalyst is composed of amines and salts obtained through reaction of the amines and acids, the grafting reaction of polylactides onto cellulose proceeds as living polymerization, so that polylactide-grafted cellulose nanofibers having a sharp polylactide molecular weight distribution may be obtained.

The amines for the organic polymerization catalyst may be, for example, alkylamines, such as methylamine, triethylamine, or ethylenediamine; aromatic amines, such as aniline; heterocyclic amines, such as pyrrolidine, imidazole, or pyridine; or amine derivatives, such as ether amine or amino acid. Among these, 4-dimethylaminopyridine is preferred for its ability to enhance the grafting reaction of polylactides.

The acids for the organic polymerization catalyst may be, for example, inorganic acids, such as hydrochloric acid; sulfonic acids, such as p-toluenesulfonic acid or trifluoromethanesulfonic acid; or carboxylic acid, such as acetic acid. Acids having a higher acidity exhibit a higher catalytic activity and, accordingly, p-toluenesulfonic acid and trifluoromethanesulfonic acid are preferred, and trifluoromethanesulfonic acid is more preferred.

The salts obtained through reaction of the amines and the acids for the organic polymerization catalyst may be, for example, 4-dimethylaminopyridinium triflate, 4-dimethylaminopyridinium tosylate, or 4-dimethylaminopyridinium chloride. Among these, 4-dimethylaminopyridinium triflate is preferred for its ability to further enhance the grafting reaction of polylactides onto cellulose.

According to the present process, with the use of 4-dimethylaminopyridine and 4-dimethylaminopyridinium triflate as the organic polymerization catalyst, the effect of enhancing polylactide grafting reaction onto cellulose nanofibers may further be improved.

The mixing ratio (by mass) of 4-dimethylaminopyridine and 4-dimethylaminopyridinium triflate, when used as the organic polymerization catalyst, is preferably 1 : 5 to 5 : 1, more preferably 1 : 2 to 2 : 1, particularly preferably 1 : 1. Even with a mixing ratio of 4-dimethylaminopyridinium triflate out of 1 : 1, the mixture may still function as the catalyst, but the reaction rate may be lower due to the smaller amount of the active catalyst present.

Polylactide-grafted cellulose nanofibers may be synthesized according to, for example, the following scheme.

[Chemical Formula 1]

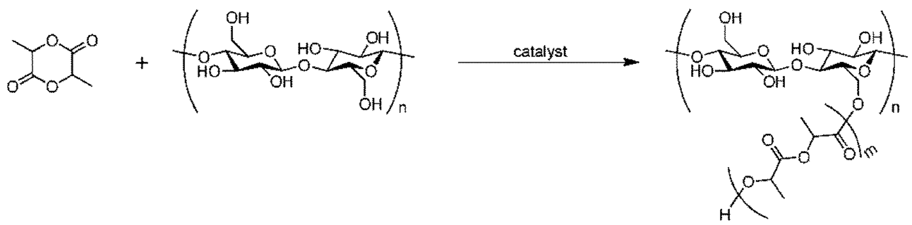


In the above scheme, n and m are integers of 1 or more. The lactide may be L-lactide, D-lactide, or a combination thereof. The polymer types may include those obtained by using solely L-lactide or D-lactide, i.e., L-polylactide and D-polylactide; and those obtained by using L-lactide and D-lactide in combination, i.e., random copolymers of L-lactide and D-lactide in random sequence and block copolymers of L-lactide and D-lactide polymerized in blocks at an arbitrary ratio.

According to the present process, in order to increase the graft percentage, the graft polymerization process may be repeated for a plurality of times, by which polylactide-grafting reaction may proceed efficiently.

The product of the graft polymerization for obtaining the polylactide-grafted cellulose nanofibers may contain ungrafted polylactide. The product per se containing the ungrafted polylactide may be used, but it is preferred to do a purification step for completely removing the ungrafted polylactide, for more strictly determining the content ratio of the polylactide-grafted cellulose nanofibers and the ungrafted polylactide. A solvent to be used in such a purification step may be, for example, dichloromethane or tetrahydrofuran, as long as the solvent is capable of dissolving therein the polylactide, unreacted monomers, and the catalyst.

<Method for Preparing Composite>

A composite of the grafted cellulose nanofibers and the ungrafted polylactide may be prepared, for example, by dispersing the grafted cellulose nanofibers in a solution of polylactide and forming the resulting dispersion into sheets or the like (mixing mode); by forming the polylactide-grafted cellulose nanofibers into sheets and laminating the sheets with films of polylactide (laminating mode); or by forming the polylactide-grafted cellulose nanofibers into sheets and impregnating the sheets with a solution of polylactide (impregnating mode). In this regard, cellulose nanofibers onto which polylactides have been grafted provide surfaces having good affinity for polylactide, resulting in good dispersion of the cellulose nanofibers in a polylactide solution. Accordingly, such a dispersing mode is also effective as a method for preparing a composite. Given the affinity on the molecular level, it is assumed that the polylactide as the matrix and the grafted polylactides in the grafted cellulose nanofibers have the same chemical structure, so that the molecular chains become tidy to form fine crystals. This is believed to occur at locations where the matrix polylactide and the grafted cellulose nanofibers are brought into contact with each other, irrespective of the mode of preparation of the composite discussed above.

<Miscellaneous>

The composite of the polylactide-grafted cellulose nanofibers and the polylactide is usable as a biodegradable molding material, and thus may be processed into various molded products through injection molding, extrusion molding, blow molding, or the like process. The processed products include not only containers or the like, which are injection molded products, but also sheets, films, foam materials, fibers, or the like, which are compression-molded products, extrusion-molded products, blow-molded products, or the like. Such molded products are applicable to electronic parts, building components, civil engineering components, agricultural materials, vehicle parts, commodities, or the like.

Polylactide, compared to utility polymers, is regarded as being more rigid, relatively brittle, and poorly flexible. Accordingly, production of molded products from polylactide requires a softener or the like to be added. In addition, polylactide is insufficient in heat resistance and lacks resistance to microwave cooking. Further, some points out that polylactide is insufficient in melting properties required for extrusion molding, blow molding, foam molding, or the like. According to the present embodiment, however, such problems are solved by adding (blending) grafted cellulose nanofibers to polylactide. This does not deny the addition of a softener or the like. Incidentally, when ungrafted cellulose nanofibers are used as the material added, shear force between the material added and the resin surface, if generated, negates most of the effects.

EXAMPLES

Examples of the present invention will now be discussed.

(1) Synthesis of polymerization catalyst 4-dimethylaminopyridinium triflate

In a two-necked flask (100 ml capacity), 1.22 g of 4-dimethylaminopyridine (white powder, manufactured by TOKYO CHEMICAL INDUSTRY CO., LTD.) was dissolved in 20 ml of tetrahydrofuran under a dry nitrogen atmosphere. Then, while the two-necked flask was cooled in an ice-cooled bath at 0 °C, 1.50 g of trifluoromethanesulfonic acid was added dropwise under stirring. Then, the resulting mass was stirred for another hour at room temperature. The reaction mixture was separated on a glass filter, washed twice with 10 ml of tetrahydrofuran, and dried under reduced pressure to quantitatively obtain 4-dimethylaminopyridinium triflate in the form of white powder.

(2) Preparation of Dried Cellulose Nanofibers

Raw material pulp (LBKP: 2 mass% solid) was pretreated in a papermaking beating apparatus, and then made finer in a high-pressure homogenizer until the pseudo particle size distribution curve of the material determined by particle size distribution measurement using laser diffraction, showed one peak (30 μm in the mode for diameter), to prepare an aqueous dispersion of cellulose nanofibers having a solid concentration of 2 mass%. This aqueous CNF dispersion was centrifuged, the supernatant was removed, a solvent was added, and the resulting solution was homogenized and then centrifuged again for concentration. This operation was repeated several times, and then the solvent was removed by lyophilization to obtain CNF in the form of white powder (31 nm in average fiber diameter).

(3) Grafting of Polylactides onto CNF

In a two-necked flask (50 ml capacity), 90 mg of CNF solvent-substituted with dichloromethane, 0.85 mg (0.0069 mmol) of 4-dimethylaminopyridine in the form of white powder (manufactured by TOKYO CHEMICAL INDUSTRY CO., LTD.), 1.89 mg (0.0069 mmol) of 4-dimethylaminopyridinium triflate synthesized above, 100 mg (0.69 mmol) of L-lactide in the form of colorless, transparent rod-shaped crystals, and 20 mL of dichloromethane were placed under a dry nitrogen atmosphere. The two-necked flask was heated in an oil bath at 40 °C for 24 hours. The resulting suspension was cooled to room temperature, and the solid was separated on a 11-3G glass filter by suction filtration, washed with 20 mL of tetrahydrofuran, and separated by suction filtration again, which operation was repeated twice to obtain purified grafted cellulose nanofibers (76.7 mg yield, graft percentage at 1.9%).

The graft percentage may be increased by multiplying the catalyst amount to five folds, ten folds, and so on. The graft percentage tends to be higher at a reaction temperature of 40 °C rather than room temperature. The graft percentage is lowered with a smaller amount of monomers, but changes little with monomers over a certain amount (100 mg in the present Examples). As shown in Table 1, the graft percentage was changed over the range of 1 to 7%, wherein the graft percentage was adjusted to a certain percentage by adjusting the reaction temperature, the amounts of monomers, the amount of catalyst, and the duration of reaction.

(4) Other Raw Materials

As the ungrafted polylactide, Ingeo 10361D manufactured by NATUREWORKS was used.

As the unmodified CNF, the above-mentioned cellulose nanofibers were used.

(5) Preparation of Cellulose Composite Resin

In the present Examples, wherein the content of the grafted cellulose nanofibers was 30 mass% or less, composites were prepared through the mixing mode discussed above. Specifically, in a 20 mL sample bottle, 198 mg of commercially available polylactide (Ingeo 10361D) and 2 mg of grafted cellulose nanofibers (1 wt% of total solid content) were placed, to which 5 mL of dichloromethane was added and stirred at room temperature for 24 hours to dissolve and disperse. The resulting dispersion was poured into a petri dish (casting), and the solvent was evaporated at room temperature under atmospheric pressure to thereby obtain a cast film. The cast film thus obtained was hot-pressed in a hot press SA-303 manufactured by TESTER SANGYO CO., LTD. at 180 °C at 10 MPa for 10 seconds to obtain a film (about 100 μm in film thickness). Through the similar operation at the ratios of the commercially available polylactide to the grafted cellulose nanofibers of 190 mg / 10 mg (5 wt%), 180 mg/ 20 mg (10 wt%), 160 mg / 40 mg (20 wt%), and 140 mg / 60 mg (30 wt%), films at the corresponding content ratios were obtained. A blank (0 wt%) film was also prepared by hot pressing 200 mg of commercially available polylactide alone. The grafted cellulose nanofiber sheet obtained through the process as discussed above (about 40 mm in diameter, about 100 μm in film thickness) was used as a referential specimen (100 wt%) .

Note that, when a composite is to be prepared through the laminating mode in order to achieve about 50 mass% content of the grafted cellulose nanofibers, the grafted cellulose nanofiber sheet obtained through the process discussed

above (about 40 mm in diameter, about 100 μm in film thickness) and a commercially available polylactide film (about 40 mm in diameter, about 100 μm in film thickness) were placed one on top of the other, and hot pressed at 180 °C at 10 MPa for 10 seconds to obtain a laminated film (about 150 μm in film thickness, test piece). The ratio by mass of the grafted cellulose nanofibers to the commercially available polylactide in the laminated film to thus be obtained is 52% / 48%.

When a composite is to be prepared through the impregnating mode, a test piece may be obtained by cutting a strip of 5 mm wide and about 30 mm long out of the grafted cellulose nanofiber sheet obtained through the process discussed above (about 40 mm in diameter, about 100 μm in film thickness), impregnating the strip with a high concentration PLA solution (90 mg of commercially available polylactide per 1 mL of dichloromethane) or a low concentration PLA solution (90 mg of commercially available polylactide per 5 mL of dichloromethane) for 60 seconds, and drying the strip (the CNF content may be calculated from the increase in weight after drying to be 97.9% and 84.4%, respectively).

Each composite resin thus obtained was processed into a tensile test piece, and the tensile strength of this test piece was determined. The tensile strength was determined in compliance with JIS K 7161. The tensile tester used was AGS-10kN manufactured by SHIMADZU CORPORATION, and the tensile strength (maximum point stress) was measured at a tension rate of 5 mm/min.

The graft percentage and the content of the grafted cellulose nanofibers and the tensile strength of the composite resin are shown in Table 1, wherein evaluation of the tensile strength of each composite resin is indicated as follows: with reference to the tensile strength of the ungrafted polylactide resin per se (blank) being 1, the tensile strength of a composite resin 1.0 time thereof or higher is indicated as ○, whereas the tensile strength of a composite resin less than 1.0 time thereof is indicated as ×.

[Table 1]

| Test Example | Mixing Percentage | | | Graft Percentage of CNF | Tensile Strength |
|---|---|---|---|---|---|
| | Commercial PLA | Untreated CNF | Graft CNF | | |
| | (%) | (%) | (%) | (%) | - |
| 1 | 100 | - | - | - | - |
| 2 | 99 | - | 1 | 4.8 | ○ |
| 3 | 95 | - | 5 | 4.8 | ○ |
| 4 | 90 | - | 10 | 4.8 | ○ |
| 5 | 80 | - | 20 | 4.8 | ○ |
| 6 | 70 | - | 30 | 4.8 | ○ |
| 7 | 99 | - | 1 | 2.7 | ○ |
| 8 | 95 | - | 5 | 2.7 | ○ |
| 9 | 90 | - | 10 | 2.7 | ○ |
| 10 | 80 | - | 20 | 2.7 | ○ |
| 11 | 99 | - | 1 | 1.9 | ○ |
| 12 | 95 | - | 5 | 1.9 | ○ |
| 13 | 90 | - | 10 | 1.9 | ○ |
| 14 | 80 | - | 20 | 1.9 | ○ |
| 15 | 99 | 1 | - | 0.0 | × |
| 16 | 95 | 5 | - | 0.0 | × |
| 17 | 90 | 10 | - | 0.0 | × |
| 18 | 80 | 20 | - | 0.0 | × |
| 19 | 70 | 30 | - | 0.0 | × |

INDUSTRIAL APPLICABILITY

The present invention is applicable as a cellulose composite resin containing cellulose nanofibers and polylactide.

## Claims

1. A cellulose composite resin comprising cellulose nanofibers and ungrafted polylactide,
wherein the cellulose nanofibers are grafted cellulose nanofibers having graft chains, and individual graft chains are formed of polylactides.

2. The cellulose composite resin according to claim 1, wherein a content of the grafted cellulose nanofibers is 46 mass% or less of a content of the ungrafted polylactide.

3. The cellulose composite resin according to claim 1 or 2, wherein a graft percentage of the grafted cellulose nanofibers is 1 to 7%.

4. The cellulose composite resin according to any one of claims 1 to 3, wherein raw materials of the grafted cellulose nanofibers include cellulose fibers 0.5 mmol/g or less of which hydroxyl groups have been modified.

5. The cellulose composite resin according to any one of claims 1 to 4, wherein less than 50% of hydroxyl groups of the grafted cellulose nanofibers have been ionized.

6. The cellulose composite resin according to any one of claims 1 to 5, wherein a degree of crystallinity of the grafted cellulose nanofibers is 50 to 90%.

**INTERNATIONAL SEARCH REPORT**

International application No.
**PCT/JP2021/031136**

**A. CLASSIFICATION OF SUBJECT MATTER**

***C08L 1/08***(2006.01)i; ***C08L 67/04***(2006.01)i; ***C08L 101/16***(2006.01)i; ***C08B 3/20***(2006.01)i
FI: C08L1/08 ZBP; C08L67/04; C08B3/20; C08L101/16

According to International Patent Classification (IPC) or to both national classification and IPC

**B. FIELDS SEARCHED**

Minimum documentation searched (classification system followed by classification symbols)

C08L1/08; C08L67/04; C08L101/16; C08B3/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/207848 A1 (OSAKA RESEARCH INSTITUTE OF INDUSTRIAL SCIENCE AND TECHNOLOGY) 15 November 2018 (2018-11-15)<br>claims, paragraphs [0022], [0039], examples 1-11 | 1-6 |
| X | CN 111690240 A (NANNING UNIVERSITY) 22 September 2020 (2020-09-22)<br>claims, examples | 1-6 |
| X | JP 2013-519736 A (FPINNOVATIONS) 30 May 2013 (2013-05-30)<br>claims, paragraphs [0007], [0015], [0018], [0036], [0040] | 1-6 |
| X | JP 2011-68707 A (KONICA MINOLTA HOLDINGS INC.) 07 April 2011 (2011-04-07)<br>claims, paragraph [0080], synthesis examples 5, 7 | 1-6 |
| P, X | CN 111825845 A (NATIONAL DONG HWA UNIVERSITY) 27 October 2020 (2020-10-27)<br>claims, example 5 | 1-6 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2021/031136**

| Patent document cited in search report | Publication date (day/month/year) | Patent family member(s) | Publication date (day/month/year) |
|---|---|---|---|
| WO 2018/207848 A1 | 15 November 2018 | US 2020/0123275 A1<br>claims, paragraphs [0029]-[0031], [0054], examples 1-11<br>EP 3623408 A1<br>CN 110730792 A<br>KR 10-2020-0007852 A | |
| CN 111690240 A | 22 September 2020 | (Family: none) | |
| JP 2013-519736 A | 30 May 2013 | WO 2011/097700 A1<br>claims, p. 3, lines 7-9, p. 5, line 19 to p. 6, line 4, p. 6, lines 16-23, p. 10, line 27 to p. 12, line 20, p. 14, lines 7-11<br>US 2011/0196094 A1<br>EP 2534180 A1<br>CN 102906123 A | |
| JP 2011-68707 A | 07 April 2011 | (Family: none) | |
| CN 111825845 A | 27 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019218545 A
- JP 2007238812 A